# EUROPÄISCHE PATENTANMELDUNG

(11) **EP 0 662 392 A2**
(43) Veröffentlichungstag der Anmeldung: **12.07.1995**
(21) Anmeldenummer: 94118554.8
(22) Anmeldetag: 22.11.1994
(51) Int. Cl.: B29D 11/00

(54) **Optisches Bauelement und Verfahren zu seiner Herstellung**

(30) Priorität: 23.11.1993 DE 4339853
(71) Anmelder: Gröber, Volker, D-07743 Jena (DE); Gräfe, Günter, D-07774 Camburg (DE)
(72) Erfinder: Gröber, Volker, D-07743 Jena (DE); Gräfe, Günter, D-07774 Camburg (DE)

(57) **Zusammenfassung**

Die Erfindung betrifft optische Bauelemente, die mit einem neuen Verfahren hergestellt werden.
Sie ermöglicht die Herstellung von hochwertigen optischen Bauelementen ohne die herkömmlichen Bearbeitungverfahren - wie Schleifen und Polieren - zu verwenden. Ausgehend von einem Trägerteil (1), an dem Grundformen (2) der optisch wirksamen Flächen (5) vorgearbeitet sind, erfolgt eine hochwertige Veredlung der Oberfläche durch eine dünne Folie (4), die auf diese Flächen aufgekittet wird. Die Kittschicht (3) gleicht Maßtoleranzen aus und die Folie (4) liefert eine saubere und polierte Oberfläche.

## Beschreibung

Die Erfindung betrifft ein optisches Bauelement gemäß dem Oberbegriff des Anspruchs 1 und ein Herstellungsverfahren gemäß dem Oberbegriff des Anspruchs 10. Die Erfindung findet in der Optik herstellenden Industrie Anwendung. Sie ermöglicht die Herstellung von hochwertigen optischen Bauelementen, ohne die herkömmlichen Bearbeitungverfahren - wie Schleifen und Polieren - zu verwenden.
Ausgehend von einem Trägerteil, an dem Grundformen der optisch wirksamen Flächen vorgearbeitet sind, erfolgt eine hochwertige Veredlung der Oberfläche durch eine dünne Folie, die auf diese Flächen aufgekittet wird. Die Kittschicht gleicht Maßtoleranzen aus und die Folie liefert eine saubere und polierte Oberfläche.

Nach DE-OS 42 12 944.3 ist ein Verfahren zur Herstellung einer Glasfläche hoher Genauigkeit und Stabilität bekannt, bei dem eine erste plane Glasscheibe durch äußere Krafteinwirkung gegen einen Glasblock mit einer vorgeformten Oberfläche gedrückt wird. Die Oberfläche der Glasscheibe nimmt die Form der Oberfläche des Glasblockes an. Eine zweite Glasscheibe etwa gleicher Dicke wird ebenfalls durch äußere Kräfte verformt und gegen die freiliegende Rückseite der ersten Glasscheibe gekittet. Es entsteht ein Verbundglas, mit einer bestimmten Oberflächenform.
Die Verwendung von annähernd gleich dicken Glasscheiben setzt enge Grenzen der Verformbarkeit und der geometrischen Ausbildung. Die relativ dicken Glasscheiben lassen sich ohne Erwärmung nur zu Flächen mit vergleichsweise großen Radien verformen, die nicht exakt vorbestimmbar sind. Im Ergebnis entsteht immer eine Glasscheibe mit gleichmäßiger Dicke, die in ihrer Form von der Masterfläche abweicht. Mit diesem Bauelement sind nur bestimmte Aufgaben in der Optik lösbar.

Mit dem Verfahren können nur Spiegelflächen oder planparallele Platten hergestellt werden. Linsen oder Prismen sind nicht herstellbar.

Der Erfindung liegt die Aufgabe zugrunde, mit vergleichsweise geringem Aufwand nahezu beliebige optische Bauelemente in hoher Qualität serienmäßig herzustellen. Es soll auch die Herstellung sehr komplizierter Formen für Anwendungen möglich werden, die hohe Stückzahlen erfordern.
Die Erfindung soll das Problem lösen, mit vergleichsweise geringem Aufwand optische Bauelemente mit vergleichsweise ungewöhnlicher Formgebung herzustellen.

Die Aufgabe wird erfindungsgemäß durch optische Bauelemente gelöst, die durch die Merkmale des Anspruchs 1 gekennzeichnet sind.
Die Aufgabe wird erfindungsgemäß durch das Verfahren mit den kennzeichnenden Merkmalen des Anspruchs 14 gelöst.
Die Unteransprüche sind vorteilhafte Ausgestaltungen des optischen Bauelementes oder des Verfahrens zu seiner Herstellung.

Das optische Bauelement besteht allgemein aus mindestens zwei Teilen, die mittels Kitt verbunden sind. Ein Teil ist eine Folie mit einer Dicke im Bereich von 0,5 mm bis 0,005 mm. Sie hat mindestens eine nahezu ideal glatte Oberfläche, die die optische Wirkfläche bildet. Die Folie ist vorzugsweise eine Glasfolie mit einer sehr gleichmäßigen Dicke von etwa 0,05 mm und mit optisch hochwertigen Oberflächen.
Die Folie ist auf mindestens eine Oberfläche eines vorgefertigten Trägerteils aufgekittet. Diese mindestens eine Oberfläche hat eine Grundform, die der Form der optisch wirksamen Fläche näherungsweise entspricht. Insbesondere bei optischen Wirkflächen mit einer kleinen Pfeilhöhe kann das Trägerteil plan sein.

Die Folie wird bei Bedarf zur Erzeugung einer gewünschten optischen Funktion vor dem Verkitten oder nach dem Verkitten auf mindestens einer Oberfläche durch Verspiegelung, Teilverspiegelung, Entspiegelung oder durch Filter oberflächenbeschichtet.

Vorzugsweise erfolgt die Beschichtung der Folie nach dem Verkitten mit dem Trägerteil. Das Trägerteil hat für Zylinderlinsen oder für Zylinderspiegel eine rechteckige Form. Für runde Linsen oder runde Spiegel ist das Trägerteil ein zylinderförmiger Körper. Für Prismen ist es an die Form des Prismas angepaßt.
Das Trägerteil hat mindestens eine plane und/oder sphärische und/oder asphärische und/oder andere Grundform in seiner Oberfläche. Die Grundform entspricht der späteren optisch wirksamen Fläche näherungsweise. Bei flachen Radien der optischen Wirkfläche kann das Trägerteil auch plan sein.

Für Spiegel hat das Trägerteil mindestens eine Seite mit einer vorgefertigten Form. Auf diese Seite wird die Folie aufgekittet.

Das Trägerteil ist für Linsen transparent und hat mindestens zwei gegenüberliegende Seiten mit definiert vorgefertigten Formen. Auf diese Seiten wird jeweils eine Folie aufgekittet.

Das Trägerteil ist für Prismen transparent und hat mindestens eine Seite mit einer definiert vorgefertigten Form. Auf diese Seite wird eine Folie aufgekittet.

Bei optischen Bauelementen, die im Durchlicht verwendet werden, sollen zumindest das Trägerteil und der Kitt in der Kittschicht eine (nahezu) gleiche Brechzahl haben.
Die Brechzahl der Folie ist unkritisch, da diese planparallel ist und die Abbildung der Strahlen nicht beeinflußt wird.

Besondere opische Wirkungen oder eine Kompensation von Umwelteinflüssen werden erreicht, wenn die mechanische Eigenschaft Elastizität des Kittes in einem ausreichenden und reproduzierbaren Maße von äußeren Einflüssen (wie Wärme, Strahlung) abhängt.

Die Erfindung ermöglicht verschiedenste Ausführungsformen optischer Bauelemente. Spiegel und/oder Linsen und/oder Prismen können an einem Trägerteil einzeln oder miteinander kombiniert kostengünstig hergestellt werden. Es sind vor allem auch sehr komplizierte Formen in großen Stückzahlen vergleichsweise preiswert herstellbar.

Die Erfindung betrifft weiterhin ein optisches Bauelement, bestehend aus einer entsprechend der herzustellenden optischen Wirkfläche vorgespannten Folie, die mit Kitt dauerhaft auf der Kittfläche eines Trägers befestigt ist.
Es ist vorteilhaft, wenn die Kittfläche der Folie bearbeitet ist, insbesondere erfolgt eine plane Bearbeitung, um das Bauteil auf einer planen Fläche des Trägers aufzukitten.

Die Erfindung betrifft weiterhin ein optisches Bauelement, bei dem die Kittfläche der Folie im verspannten Zustand bearbeitet ist und die Folie nach dem Entspannen mit Kitt dauerhaft auf der Kittfläche eines Trägers befestigt ist.

Bisher wird beim Fügen von optischen Bauteilen meist das Ziel verfolgt, eine möglichst spannungsfreie Verbindung herzustellen.
Die Erfindung geht davon aus, daß Spannungen im Material an sich nicht nachteilig sind, wenn diese definierter Art und technologisch beherrschbar sind.

Die Form der optisch wirksamen Fläche wird einmalig als Masterfläche im Negativ hergestellt. Das Mutterteil dient als Maßverkörperung für die optisch wirksame Fläche für eine große Zahl herzustellender optischer Bauelemente.
Das Mutterteil wird aus Glas oder aus einem anderen Werkstoff hergestellt, dessen Oberfläche sich gut, hochgenau und mit einer hohen Oberflächengüte bearbeiten läßt. Auf diese Masterfläche ist die Folie auflegbar, die sich durch Adhässionskraft an die Oberfläche ansprengt.
In einem Fall wird das Mutterteil aus einer feinporösen Glaskeramik hergestellt.
Die Umfangsflächen des Mutterteils werden so behandelt, daß diese luftundurchlässig werden. An die Grundfläche des Mutterteils wird ein Vakuum angeschlossen, das durch die Poren an der Masterfläche wirksam ist und die aufgelegte Folie gleichmäßig an die Masterfläche anzieht.
In einem weiteren Fall hat das Mutterteil mindestens eine Bohrung, um das Vakuum an die Masterfläche zu führen.

Auf die Oberfläche des Trägerteils wird eine blasenfreie Kittschicht aufgebracht. Dann wird das Trägerteil mit dieser kittbeschichteten Oberfläche auf die freiliegende Seite der Folie so aufgedrückt, daß eine blasenfreie Kittschicht entsteht. Die Teile werden in der Regel fixiert bis der Kitt ausgehärtet ist. Der Kitt ist durch UV-Strahlung schnell aushärtbar.

Das Verfahren ist insbesondere für vergleichsweise ausgefallene optische Teile vorgesehen. Die sind insbesondere Zylinderlinsen, die eine Länge von bis zu 400 mm oder darüber haben. Solche Bauelemente sind konventionell nur mit großen Schwierigkeiten herstellbar.

Die Erfindung betrifft ein Verfahren zur Herstellung eines optischen Bauteils, bei dem das Mutterteil mit einer Masterfläche, die das Negativ der herzustellenden optischen Wirkfläche ist, so mit mindestens einer Bohrung versehen wird, daß diese die Masterfläche in mindestens einen mittig liegenden Bereich durchstößt. An das der Masterfläche abseitige Ende der Bohrung wird eine Vakuumpumpe angeschlossen, wobei die auf die Masterfläche aufgelegte dünne Folie vom Unterdruck angesaugt wird, und dabei eine Fläche der Folie genau an der Masterfläche angelegt wird. Diese Fläche bildet die spätere optische Wirkfläche. Weiterhin wird die verformte Folie unter Beibehaltung des Vakuums mit ihrer freiliegenden Kittfläche auf der Kittfläche des Trägerteiles mit einer vorher aufgebrachten Kittschicht in Berührung gebracht. Der Kitt wird ausgehärtet, bevor das Vakuum abgeschaltet wird. Nach dem Abschalten des Vakuums wird das Mutterteil von der Folie entfernt. Bei einer geringen Pfeilhöhe der optischen Wirkfläche ist es ausreichend, wenn das Trägerteil eine plane Oberfläche hat. Die Bedingung des Anspruchs 1, daß die Oberfläche des Trägerteils eine Form hat, die der Form der optisch wirksamen Fläche näherungsweise entspricht, ist dann noch erfüllt. Die Formtoleranzen werden durch die Kittschicht ausgeglichen.

In einer zweiten Variante wird die verformte Folie in Verbindung mit dem Mutterteil unter Beibehaltung des Vakuums an der Kittfläche plan bearbeitet.
Diese Bearbeitungsmöglichkeit ist jedoch nur dann möglich, wenn die Krümmung der optischen Wirkfläche so gering ist, daß die Pfeilhöhe kleiner oder gleich der Dicke der verwendeten Folie ist.
Die Folie wird unter Beibehaltung des Vakuums mit ihrer nun planen Kittfläche auf der Kittfläche des Trägers, die auch plan ist, mit einer Kittschicht in Berührung gebracht und der Kitt wird ausgehärtet, wobei das Vakuum immer anliegt.

In einer anderen erfindungsgemäßen Lösung wird ein Mutterteil mit einer Masterfläche, die das Negativ der herzustellenden optischen Wirkfläche ist, so mit mindestens einer Bohrung versehen, daß diese die Masterfläche in mindestens einen mittig liegenden Bereich durchstößt. An das der Masterfläche abseitige Ende der Bohrung wird eine Vakuumpumpe angeschlossen, wobei eine auf die Masterfläche aufgelegte dünne Folie vom Unterdruck angezogen wird, und dabei eine Oberfläche der Folie genau an der Masterfläche anliegt und die optische Wirkfläche bildet.
Die verformte Folie wird in Verbindung mit dem Mutterteil unter Beibehaltung des Vakuums an der Kittfläche plan bearbeitet. Die verformte Folie wird unter Beibehaltung des Vakuums mit ihrer freiliegenden Kittfläche auf der Kittfläche eines Trägers mit einer Kittschicht in Berührung gebracht. Dann wird, nach dem Abschalten des Vakuums, das Mutterteil(1) von der Folie (3) entfernt. Die Folie entspannt sich. Anschließend wird der Kitt ausgehärtet.

Die Verfahren finden insbesondere bei allen Fällen Anwendung, bei denen die Länge des optischen Bauteiles sehr groß im Verhältnis zu seiner Breite ist, und nur schmale, leicht gekrümmte Bereiche erforderlich sind (langgestreckte Zylinderlinsen). Die Länge der Teile kann bis über 400 mm sein.

Die Erfindung wird anhand von Figuren beschrieben. Es zeigen:
- Figur 1:: Sphärischer Zylinderspiegel
- Figur 2:: Asphärischer Zylinderspiegel
- Figur 3:: Zylinderlinse
- Figur 4:: Runde Linse
- Figur 5:: Penta-Prisma
- Figur 6:: Torischer Hohlspiegel
- Figur 7:: Kombination verschiedener Formen optischer Wirkflächen an einem optischen Bauelement
- Figur 8:: Großflächiger Spiegel
- Figur 9:: Mutterteil mit angelegter Folie
- Figur 10:: Verkitten der Folie im verspannten Zustand
- Figur 11:: Optisches Bauteil mit planer Kittfläche der Folie
- Figur 12:: Optisches Bauteil mit entspannter bearbeiteter Folie
- Figur 13:: Vorrichtung zur Herstellung der optischen Bauelemente

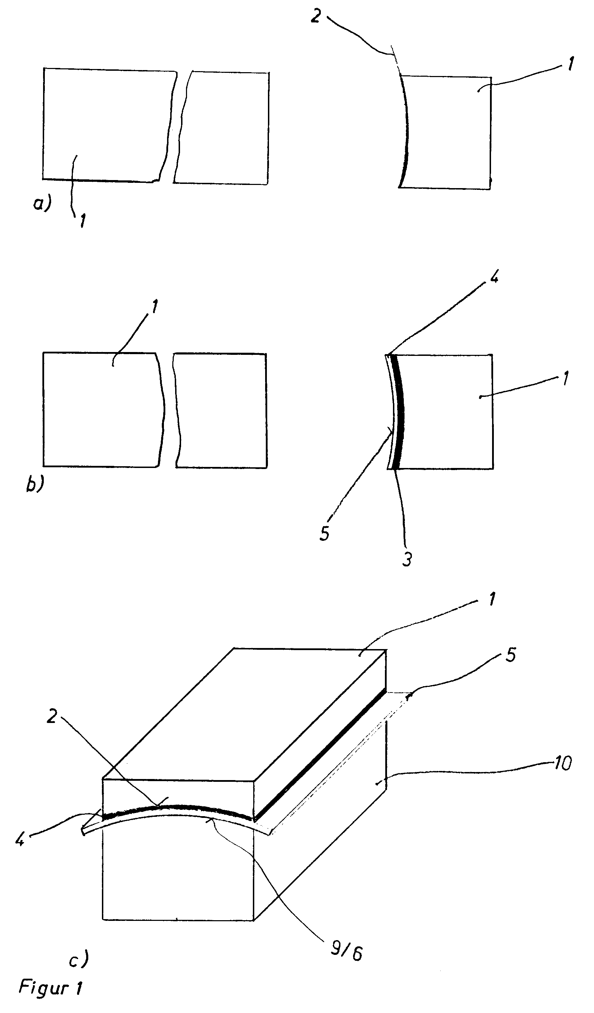

**Figur 1** a) zeigt das durch Feinpressen vorgefertigte Trägerteil 1 für einen sphärischen Zylinderspiegel.
   Dieser Zylinderspiegel besteht aus einem rechteckförmigen Trägerteil 1. Dieses Teil kann beispielsweise aus Metall, Glas oder Glaskeramik gefertigt sein. Die Anforderungen an die Maßhaltigkeit und Genauigkeit sind vergleichsweise gering. Die Grundform 2 muß nur näherungsweise der Form der zu fertigenden optischen Wirkfläche, hier des Zylinderspiegels, entsprechen.
   Auf die Grundform 2 des Trägerteils 1 ist gemäß Figur 1 b) eine dünne Folie 4 so aufgekittet, daß die freiliegende Oberfläche der Folie 4 die optische Wirkfläche 5 ist. Die Kittschicht 3 verbindet die Teile fest miteinander und dient als Ausgleichsschicht für die Maßtoleranzen des Trägerteils 1.
   Zur Herstellung wird die Folie 4 auf eine Masterfläche 10 eines Mutterteils 9 aufgelegt (Figur 1 c)). Dann wird das auf seiner Grundform-Fläche 2 mit Kitt 3 beschichtete Trägerteil 1 gegen die Masterfläche 10 auf die Folie 4 aufgedrückt und blasenfrei verkittet. Nach dem Aushärten des Kittes 3 ist das Trägerteil 1 mit der fixierten Folie 4 handhabbar. Die freiliegende optische Wirkfläche 5 kann dann beschichtet und/oder oberflächenvergütet werden. Beispielsweise wird zur Herstellung des Spiegels auf die freiliegende Oberfläche der Folie 4 eine Metallschicht zur Verspiegelung aufgedamft.

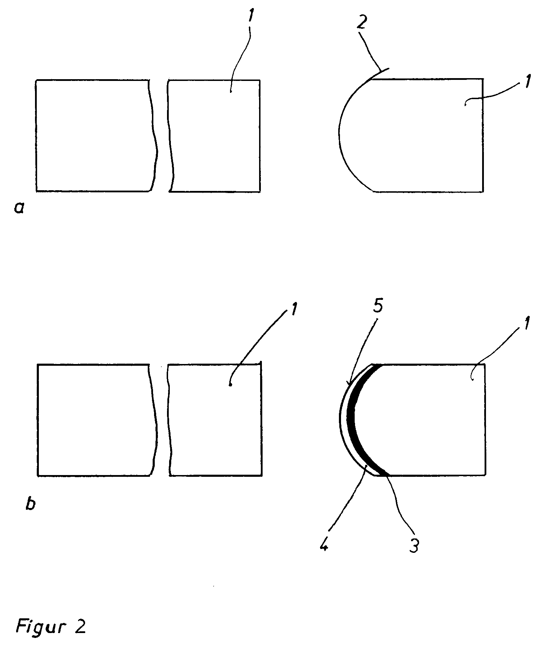

**Figur 2** a) zeigt ein zylinderförmiges Trägerteil 1 mit einer asphärischen Grundform 2. Zur Herstellung des asphärischen Zylinderspiegels wird ein Mutterteil 9 verwendet, daß eine asphärische Masterfläche 10 hat. Auf diese Masterfläche 10 wird die Folie 4 aufgelegt und das Trägerteil 1 wird mit seiner Grundform-Fläche 2 aufgekittet. Die optische Wirkfläche 5 wird verspiegelt.
   Figur 2 b) zeigt den fertig hergestellten asphärischen Zylinderspiegel.

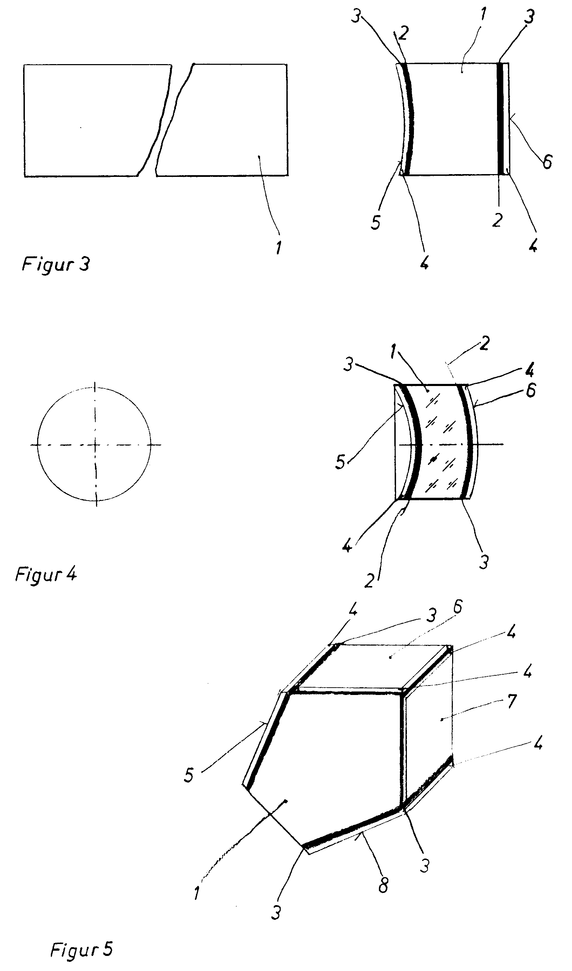

**Figur 3** zeigt eine Zylinderlinse. Die Zylinderlinse besteht aus einem rechteckförmigen Trägerteil 1, das aus einem transparenten Material, beispielsweise aus Glas, besteht. Auf zwei sich gegenüberliegenden Seiten sind die Grundformen 2 vorgefertigt. Im Beispiel sind eine erste Grundform 2 sphärisch und eine zweite Grundform 2 plan. Zuerst wird die erste optische Wirkfläche 5 hergestellt. Auf eine erste Masterfläche 10 eines ersten Mutterteils 9 wird die Folie 4 aufgelegt und die erste mit Kitt beschichtete Grundform-Fläche 2 des Trägerteils 1 wird auf die Folie 4 so aufgekittet, daß die Oberfläche der zweiten Grundform 2 einen definierten Abstand zu der ersten optischen Wirkfläche 5 hat. Nach dem Aushärten des Kittes 3 erfolgt die Herstellung der zweiten optischen Wirkfläche 6.
   Die Folie 4 wird auf eine zweite Masterfläche 10 eines zweiten Mutterteils 9 aufgelegt und die mit Kitt 3 beschichtete zweite Grundform-Fläche 2 wird so aufgekittet, daß eine definierte Mittendicke der Zylinderlinse entsteht. Die Kittschichten 3 gleichen die Maßtoleranzen aus.
   Voraussetzung für eine hochwertige optische Abbildung sind (annähernd) gleiche Brechzahlen des Trägerteils 1, des Kittes 3 und der Folie 4. In diesem Fall sind die freiliegenden Außenflächen der Folie 3 die erste optisch wirksame Fläche 5 und die zweite optisch wirksame Fläche 6.
   Da die Folie 4 planparallel ist, hat diese im Strahlengang keine abbildende optische Wirkung. Daher kann die Brechzahl der Folie 4 auch von der Brechzahl des Kittes 3 und des Trägers 1 verschieden sein. In diesem Fall sind die optischen Wirkflächen 5 und 6 an den Trennflächen Kittschicht 3 und Folie 4.
**Figur 4** zeigt eine runde Linse. Die dünne Folie 4 ist so elastisch, daß sphärische oder asphärische runde Flächen - wie oben für Zylinderlinsen beschrieben - hergestellt werden können. Bis zu einer Pfeilhöhe von beispielsweise 3 mm kann die dünne Folie 4 ohne Faltenbildung auf die Masterfläche 10 des Mutterteils 9 aufgespannt werden. Die Folie ist so elastisch, daß die geforderte Qualität der optischen Eigenschaften des fertig hergestellten Bauteiles erreicht wird.

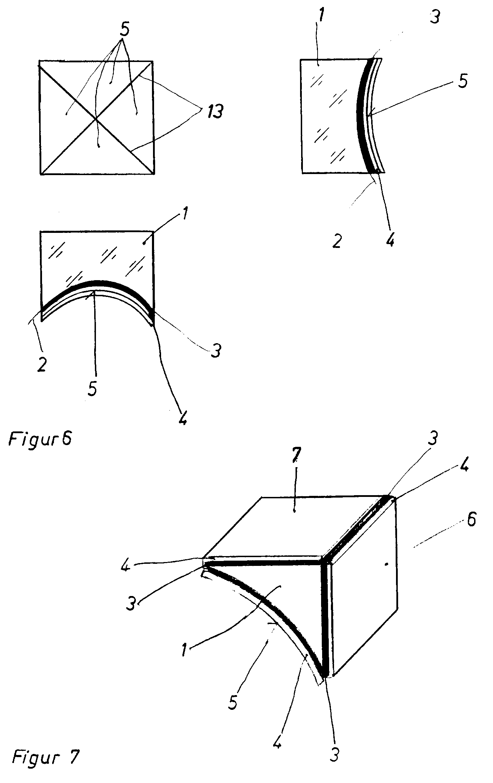

**Figur 5** zeigt ein Penta-Prisma, dessen optisch wirksame Flächen durch die Oberfläche von Folien 4 gebildet werden. Auf das Trägerteil 1 werden nacheinander die erste bis vierte optische Wirkfläche 5, 6, 7 und 8 hergestellt. Das Trägerteil 1 kann vergleichsweise große Maßtoleranzen haben, die von den Kittschichten 3 ausgeglichen werden.

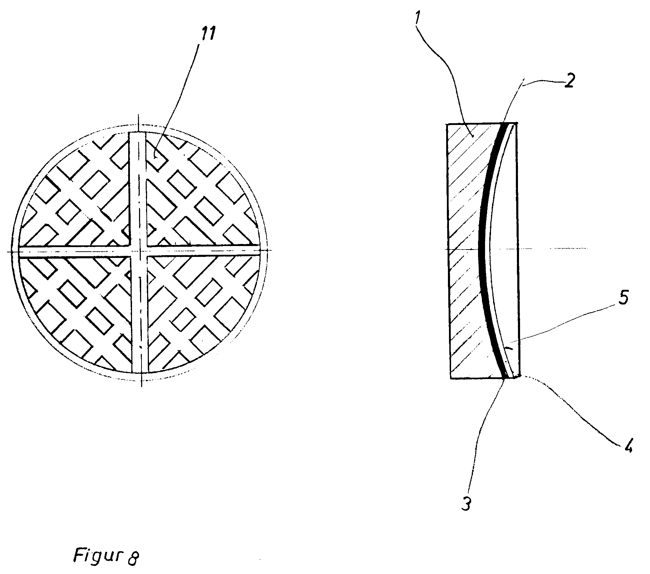

**Figur 6** stellt einen torischen Hohlspiegel dar, der gleichzeitig eine Abbildung und eine Knickung des Strahlenganges bewirkt. Die relativ stark gekrümmte optisch wirksame Oberfläche wird durch vier sektorförmig aufgekittete Folie-Stücke 4 gebildet. Die sich bildenden Trennlinien 13 zwischen den Folie-Stücken stören in den meisten Anwendungen nicht.
   Mit sektorförmigen Folie-Stücken ist auch eine runde Linse mit einem kleineren Krümmungsradius (stark kugelförmig) herstellbar.
   Die optisch wirksamen Flächen werden durch die Folien 4 festgelegt, die in der oben beschriebenen Art und Weise mit dem Trägerteil 1 verbunden werden. Die Folie 4 ist in kreissegmentförmige Scheiben aufgeteilt, um eine Faltenbildung zu verhindern.

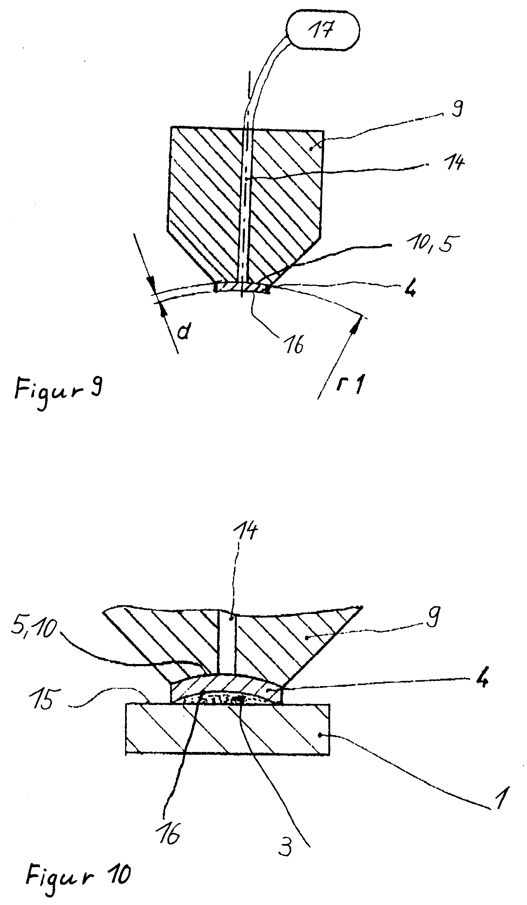

**Figur 7** zeigt eine Kombination verschiedener optisch wirksamer Flächen an einem optischen Bauelement. Die erste optische Wirkfläche 5 ist eine sphärische Fläche. Die zweite optische Wirkfläche 6 und die dritte optische Wirkfläche 7 liegen in einem Winkel zueinander und der ersten optischen Wirkfläche 5 gegenüber. Die zweite optische Wirkfläche 6 ist ein Spiegel und die dritte optische Wirkfläche 7 ist eine plane Fläche.
**Figur 8** stellt einen großflächigen Spiegel dar, der insbesondere in astronomischen Geräten Verwendung findet. Ein geeigneter großflächiger Träger 1 hat eine ersten Fläche (Grundform 2), die der Oberfläche des Spiegels näherungsweise entspricht und eine zweite Fläche, die zur Stabilisierung eine wabenförmige Struktur 11 hat. Der Träger 1 ist aus einem formbeständigen Material, beispielsweise einer Glaskeramik gefertigt und durch die wabenförmige rückseitige Struktur 11 sehr stabil. Auf die Grundform 2 des Trägers 1 wird Kitt 3 aufgebracht. Der Träger 1 wird dann auf die auf dem Mutterteil 9 aufgelegte Folie 4 blasenfrei angedrückt.
   Mit einem Mutterteil 9 können viele hochwertige gleichartige Spiegel hergestellt werden.
**Figur 9** zeigt ein Mutterteil 9 mit einer angesaugten Folie 4. Das Mutterteil 9 hat eine Masterfläche 10, die dem Negativ der späteren optischen Wirkfläche 5 entspricht. Im Beispiel ist die Masterfläche in der Tiefe des Blattes 400 mm lang. Das Mutterteil 9 hat weiterhin 38 auf der Länge von 400 mm verteilt angeordnete Bohrungen 14, die an eine Vakuumpumpe 17 angeschlossen sind. Das in der Bohrung 14 wirkende Vakuum saugt die Folie 4 mit ihrer optischen Wirkfläche 5 auf der ganzen Länge an die Masterfläche 10 an. Die Folie 4 hat eine Dicke d von 0,01 mm und einen Radius der optischen Wirkfläche r₁. Sie ist 10 mm breit und 400 mm lang.

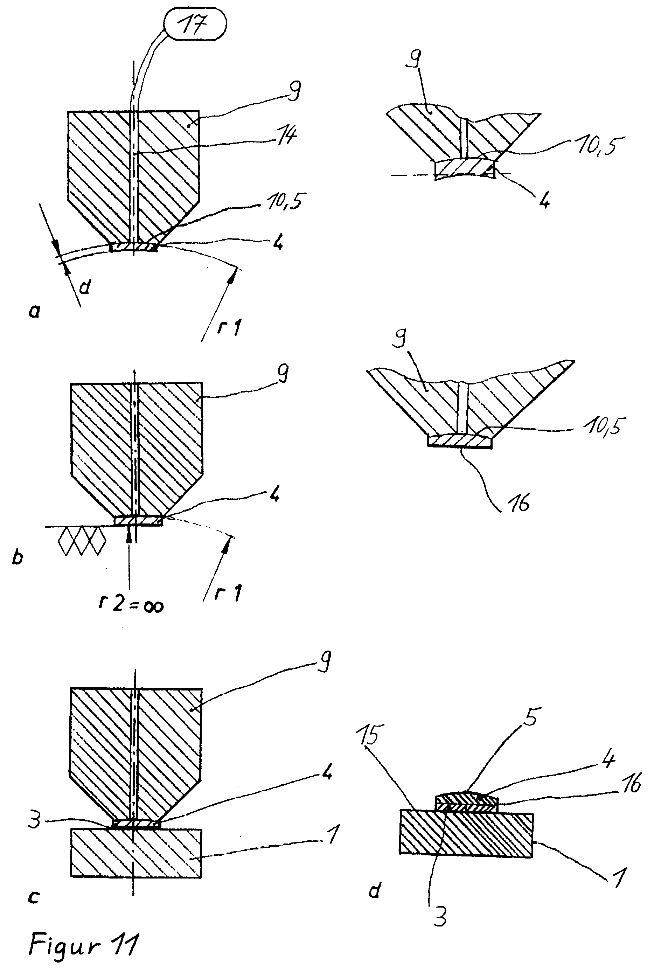

**Figur 10** zeigt das Mutterteil 9 mit der vorgespannten Folie 4. Die Kittschicht 3 der Folie 4 ist unbearbeitet.
   Auf eine Kittfläche 15 des Trägerteiles 1 wurde eine Kittschicht 3 aufgebracht und die Folie 4 wurde in Kontakt mit der Kittschicht 3 gebracht. In diesem Zustand erfolgt ein Aushärten der Kittschicht 3 durch eine Bestrahlung mit UV-Licht. Nach Abschalten des Vakuums ist das Mutterteil 9 von der Folie entfernbar.
   Dieses Bauelement kann vorzugsweise als Spiegel verwendet werden, wenn die optische Wirkfläche 5 verspiegelt ist.
   Die Verwendung des Bauelementes ist auch in Transmission möglich, wenn die Kittschicht blasenfrei ist und Kitt, Träger und/oder Folie angepaßte Brechzahlen haben.

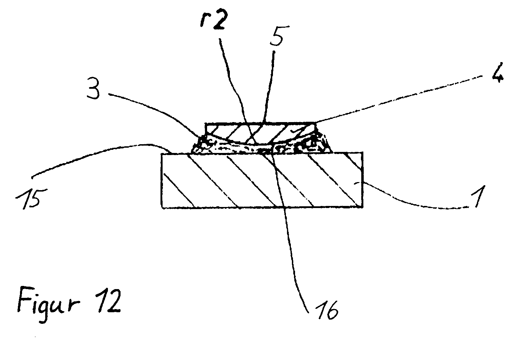

**Figur 11** stellt die einzelnen Verfahrensschritte dar, wenn die Folie im verspannten Zustand bearbeitet wird. Figur 11a zeigt das Mutterteil 9 mit verspannter Folie 4. Figur 11b zeigt das Mutterteil 9 mit der verspannten Folie 4, wobei die Kittfläche 3 der Folie im verspannten Zustand bearbeitet wurde. Im Beispiel wurde eine Planfläche anpoliert.
   Gemäß Figur 11c wird die bearbeitete Folie 4 im verspannten Zustand mit ihrer freiliegenden Kittfläche 16 auf die Kittfläche 15 des Trägerteiles 1 aufgekittet. Nach Aushärten des Kittes werden das Vakuum abgeschalten und das Mutterteil 9 entfernt.
   Figur 11d zeigt das optische Bauelement, das in Transmission und in Reflexion verwendet werden kann.

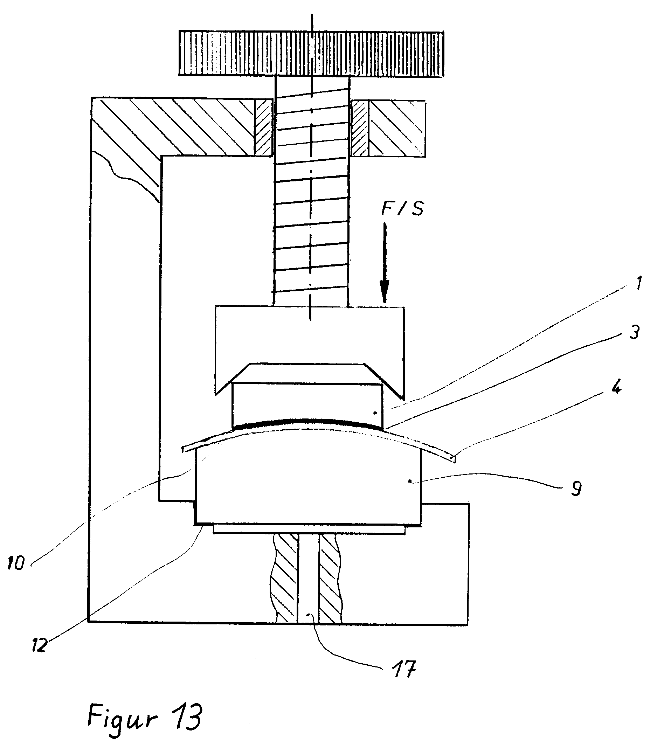

**Figur 12** stellt eine weitere Variante eines optischen Bauteils dar. Die Bearbeitung der Folie 4 erfolgt analog der zu Figur 11 beschriebenen Vorgehensweise. Die verspannte Folie wird auf ihrer Kittfläche 16 bearbeitet und in die Kittschicht 3 auf der Kittfläche 15 des Trägers 1 aufgesetzt. Im Unterschied zu der Vorgehensweise in Figur 11 wird in diesem Fall das Vakuum vor dem Aushärten des Kittes abgeschalten. Infolge der Elastizität der Folie entsteht an der optischen Wirkfläche eine Planfläche und an der Kittfläche 16 der Folie 4 ein Radius r₂.
   Wird bei einer verspannt gekitteten Folie ein Kitt verwendet, bei dem die mechanische Eigenschaft Elastizität in einem ausreichenden und reproduzierbaren Maße von äußeren Einflüssen (wie Wärme, Strahlung) abhängt, kann eine Strahlbeeinflussung realisiert werden. Infolge der veränderten Dehnbarkeit des Kittes erfolgt eine Veränderung der Krümmung der Folie, die eine Veränderung der Abbildungseigenschaften bewirkt. Auf sehr einfache Art kann damit zum Beispiel eine Temperaturkompensation eines optischen Strahlenganges erfolgen.
**Figur 13** zeigt die Vorrichtung zur Herstellung der optischen Bauelemente im Prinzip. An einem Mutterteil 9 wird einmalig eine Masterfläche 10 hergestellt, die der From der zu erzeugenden optischen Wirkfläche als Negativ genau entspricht.
   Im einfachsten Fall wird die Folie 4 nur auf die Masterfläche 9 aufgelegt und überwiegend durch Kohässionskräfte fixiert.
   Die Folie kann aber auch durch zusätzliche Kräfte auf die Oberfläche angedrückt werden. Beispielsweise erfolgt dies durch elektrostatische Kräfte, die durch unterschiedliche elektrische Aufladung der Folie 4 und des Mutterteils 9 entstehen.

Zusätzliche Kräfte, die die Folie 4 an die Masterfläche 10 anlegen, können auch durch ein Vakuum erzeugt werden, das in der Masterfläche 10 wirkt. Vorzugsweise ist das Mutterteil 9 aus einer feinporösen Glaskeramik hergestellt. Die Seitenflächen des Mutterteils 9 sind verdichtet. Ein an die Grundfläche 12 angeschlossenes Vakuum überträgt sich durch die Poren der Glaskeramik auf die Masterfläche 10 und zieht die darauf aufliegende Folie 4 an.

Das mit Kitt 3 beschichtete Trägerteil 1 wird mit einer Andruckkraft F auf die Folie 4 aufgedrückt. Dabei wird der Zustellweg s so gewählt, das eine definierte Dicke des fertig hergestellten optischen Bautelementes realisiert werden kann.

### Bezugszeichen

- 1: Trägerteil
- 2: Grundform
- 3: Kittschicht (Kitt)
- 4: Folie
- 5: erste optische Wirkfläche
- 6: zweite optische Wirkfläche
- 7: dritte optische Wirkfläche
- 8: vierte optische Wirkfläche
- 9: Mutterteil
- 10: Masterfläche
- 11: wabenförmige Struktur
- 12: Grundfläche
- 13: Trennlinie
- 14: Bohrung
- 15: Kittfläche des Trägerteiles
- 16: Kittfläche der Folie
- 17: Vakuumanschluß
- F: Kraft
- s: Stellweg
- d: Dicke der Folie
- r₁: Radius der optischen Wirkfläche
- r₂: Radius der Kittfläche

## Patentansprüche

1. Optisches Bauelement, bestehend aus mindestens zwei Teilen, die mittels Kitt (3) verbunden sind, **dadurch gekennzeichnet, daß**
- eine Folie (4)
-- mit einer Dicke im Bereich von 0,5 mm bis 0,005 mm,
-- die mindestens eine nahezu ideal glatte Oberfläche hat, die die optische Wirkfläche (5) bildet,
- auf mindestens eine Oberfläche eines Trägerteils (1) aufgekittet ist, wobei
-- diese Oberfläche eine Grundform (2) hat, die der Form der optisch wirksamen Fläche (5) näherungsweise entspricht.

2. Optisches Bauelement nach Anspruch 1, **dadurch gekennzeichnet, daß**
die Folie (4) eine Glasfolie mit einer gleichmäßigen Dicke von etwa 0,05 mm ist.

3. Optisches Bauelement nach Anspruch 1, **dadurch gekennzeichnet, daß**
die Folie (4) auf mindestens einer Oberfläche durch Verspiegelung, Teilverspiegelung, Entspiegelung oder durch Filter oberflächenbeschichtet ist.

4. Optisches Bauelement nach Anspruch 1, **dadurch gekennzeichnet, daß**
das Trägerteil (1)
- für Zylinderlinsen oder für Zylinderspiegel ein rechteckiger Körper,
- für runde Linsen oder runde Spiegel ein zylinderförmiger Körper,
- für Prismen ein beliebig geformter Körper
mit mindestens einer planen und/oder sphärischen und/oder asphärischen und/oder anderen Oberfläche ist.

5. Optisches Bauelement nach Anspruch 4, **dadurch gekennzeichnet, daß**
für Spiegel mindestens eine Seite des Trägerteils (1) eine definierte Form (Grundform 2) hat und auf diese Seite die Folie (4) aufgekittet ist.

6. Optisches Bauelement nach Anspruch 4, **dadurch gekennzeichnet, daß**
das Trägerteil (1) für Linsen transparent ist und das mindestens zwei gegenüberliegende Seiten mit definierten Formen (Grundformen 2) hat und auf diese Seiten jeweils eine Folie (4) aufgekittet ist.

7. Optisches Bauelement nach Anspruch 6, **dadurch gekennzeichnet, daß**
das Trägerteil (1) für Prismen transparent ist und mindestens eine Seite mit einer definierten Form (Grundform 2) hat und auf diese Seite eine Folie (4) aufgekittet ist.

8. Optisches Bauelement nach Anspruch 6 oder Anspruch 7, **dadurch gekennzeichnet, daß**
das Trägerteil (1) und der Kitt in der Kittschicht (3) eine nahezu gleiche Brechzahl haben.

9. Optisches Bauelement nach einem oder mehreren der vorhergehenden Ansprüche, **dadurch gekennzeichnet, daß**
Spiegel und/oder Linsen und/oder Prismen an einem Trägerteil (1) einzeln oder miteinander kombiniert angeordnet sind.

10. Optisches Bauelement nach Anspruch 1, bestehend aus einer entsprechend der herzustellenden optischen Wirkfläche (5) vorgespannten Folie (4), die mit Kitt dauerhaft auf der Kittfläche (15) eines planen Trägers (1) befestigt ist.

11. Optisches Bauelement nach Anspruch 10, bei dem die Kittfläche (16) der Folie bearbeitet ist, insbesondere plan bearbeitet ist.

12. Optisches Bauelement nach Anspruch 10, bestehend aus einer entsprechend der herzustellenden optischen Wirkfläche (5) vorgespannten Folie (4), bei dem die Kittfläche (16) der Folie bearbeitet ist und die Folie (4) nach dem Entspannen mit Kitt dauerhaft auf der Kittfläche (15) eines Trägers (5) befestigt ist.

13. Optisches Bauelement nach Anspruch 11 oder Anspruch 12, bei dem die mechanische Eigenschaft Elastizität der Kittschicht (3) in einem ausreichenden und reproduzierbaren Maße von äußeren Einflüssen (wie Wärme, Strahlung) abhängt.

14. Verfahren zur Herstellung eines optischen Bauelementes, bei dem mindestens zwei Teile miteinander verkittet werden, **dadurch gekennzeichnet, daß**
- ein Trägerteil (1) gefertigt wird, dessen
-- mindestens eine Oberfläche eine Grundform (2) hat, die der Form der optisch wirksamen Fläche näherungsweise entspricht,
- Folie (4) gefertigt wird, die eine Dicke im Bereich von 0,5 mm bis 0,005 mm und die mindestens eine optisch glatte und saubere Oberfläche hat,
- ein Mutterteil (9) mit mindestens einer Oberfläche als Masterfläche (10) als Negativ gefertigt wird, die als Maßverkörperung für die spätere optisch wirksame Fläche des optischen Bauelementes dient,
- die Folie (4) mit der mindestens einen glatten Seite auf die Masterfläche (10) aufgelegt wird,
- auf die Grundform (2) des Trägerteils (1) eine Kittschicht (3) aufgebracht wird,
- das Trägerteil (1) mit dieser kittbeschichteten Oberfläche auf die freiliegende Seite der Folie (4) aufgedrückt und fixiert wird, bis der Kitt (3) ausgehärtet ist.

15. Verfahren nach Anspruch 14, **dadurch gekennzeichnet, daß**
zur Herstellung eines Spiegels auf eine vorgefertigte Oberfläche (Grundform 2) des Trägerteils (1) eine Folie (4) aufgekittet wird.

16. Verfahren nach Anspruch 14, **dadurch gekennzeichnet, daß**
zur Herstellung einer Linse auf zwei gegenüberliegende vorgefertigte Oberflächen (Grundformen 2) des Trägerteils (1) je eine Folie (4) aufgekittet wird.

17. Verfahren nach Anspruch 14, **dadurch gekennzeichnet, daß**
zur Herstellung eines Prismas auf mindestens eine vorgefertigte Oberfläche (Grundform 2) des Trägerteils (1) eine Folie (4) aufgekittet wird.

18. Verfahren nach Anspruch 14, **dadurch gekennzeichnet, daß**
das Mutterteil (9) aus einem feinporösen Material hergestellt wird, wobei die Masterfläche (10) und die gegenüberliegende Grundfläche (12) luftdurchlässig sind und die umgebenden Seitenflächen so verdichtet werden, daß sie luftundurchlässig sind oder das Muttertteil (9) mindestens eine Bohrung für eine Vakuumleitung (17) aufweist und an das der Mutterfläche (9) abseitige Ende der Bohrung eine Vakuumpumpe angeschlossen wird.

19. Verfahren nach Anspruch 14, **dadurch gekennzeichnet, daß**
das Mutterteil (9) und die Folie (4) mit entgegengesetzt geladenen elektrischen Teilchen so beaufschlagt werden, daß elektrostatische Kräfte ein Anlegen der Folie (4) an die Masterfläche (10) bewirken.

20. Verfahren nach Anspruch 14, bei dem
die auf die Masterfläche (10) aufgelegte dünne Folie (4) vom Unterdruck angezogen wird und dabei eine Oberfläche der Folie (4) genau an der Masterfläche (3) anliegt und die optische Wirkfläche (5) bildet, weiterhin
die verformte Folie (4) unter Beibehaltung des Vakuums mit ihrer freiliegenden Kittfläche (16) auf der Kittfläche (15) eines Trägers (1) mit einer Kittschicht (3) in Berührung gebracht und der Kitt ausgehärtet wird, bevor das Vakuum abgeschaltet wird und dann nach dem Abschalten des Vakuums das Mutterteil (9) von der Folie (4) entfernt wird.

21. Verfahren nach Anspruch 20, bei dem die verformte Folie (4) in Verbindung mit dem Muttereil (9) unter Beibehaltung des Vakuums an der Kittfläche (16) plan bearbeitet wird und die Folie (4) unter Beibehaltung des Vakuums mit ihrer planen Kittfläche (16) auf der Kittfläche (15) des Trägers (1) mit einer Kittschicht (3) in Berührung gebracht und der Kitt ausgehärtet wird, bevor das Vakuum abgeschaltet wird.

22. Verfahren nach Anspruch 14, bei dem die auf die Masterfläche (10) aufgelegte dünne Folie (4) vom Unterdruck angezogen wird und dabei eine Oberfläche der Folie (4) genau an der Masterfläche (10) anliegt und die optische Wirkfläche (5) bildet, weiterhin
- die verformte Folie (4) in Verbindung mit dem Mutterteil (9) unter Beibehaltung des Vakuums an der Kittfläche (16) plan bearbeitet wird und
- die verformte Folie (4) unter Beibehaltung des Vakuums mit ihrer freiliegenden Kittfläche (16) auf der Kittfläche (15) des Trägers (1) mit einer Kittschicht (3) in Berührung gebracht, dann nach dem Abschalten des Vakuums das Mutterteil (9) von der Folie (4) entfernt und dabei die Folie entspannt wird und dann der Kitt ausgehärtet wird.
